# EUROPEAN PATENT APPLICATION

(11) **EP 4 706 978 A1**
(43) Date of publication of application: **11.03.2026**
(21) Application number: 24210127.7
(22) Date of filing: 31.10.2024
(51) Int. Cl.: B60B 30/02, B60B 30/10, B60S 9/00, B66F 5/00

(54) **WHEEL DOLLY**

(30) Priority: 05.09.2024 US 202418825675
(71) Applicant: Coccaro, Albert V., Mount Kisco, NY 10549 (US)
(72) Inventor: Coccaro, Albert V., Mount Kisco, NY 10549 (US)
(74) Representative: AWA Sweden AB

(57) **Abstract**

A wheel dolly capable of lifting the wheel of a vehicle in response to the cycling of an actuation lever is described. The wheel dolly allows a user to select an operational mode wherein the starting height of the actuation lever is reduced. With the lower starting height, a user may be able to actuate the wheel dolly with less force and may find using the wheel dolly more comfortable

## Description

### FIELD OF THE INVENTION

The present invention relates generally to apparatus for use in positioning vehicles, and, more particularly, to wheel dollies that can be placed under the wheels of a vehicle to allow the vehicle to be repositioned on casters.

### BACKGROUND OF THE INVENTION

United States Patent No. 4,854,803, titled "Apparatus and Method for Jacking and Dollying an Affixed Vehicle Wheel Assembly," issued to A.V. Coccaro (hereinafter "the 803-Patent"), discloses a wheel dolly designed to lift a vehicle's wheel off the ground, enabling the vehicle to be repositioned. The invention features a "bidirectional, double pawl, lever ratchet mechanism" that, when the user pumps an actuation lever, drives two opposed rollers against the vehicle's wheel, lifting it off the ground. With the vehicle supported by four such wheel dollies, it can be easily moved using the casters attached to the dollies.

Aspects of the 803-Patent have been successfully commercialized in the GOJAK^{®} line of wheel dollies offered by Zendex Tool Corp. (Danbury, CT, US). In such a wheel dolly, the user is presented with an actuation lever that pivots about a pivot point. A distal end of the actuation lever includes a foot pedal for the user's foot. To cause the wheel dolly to expand or contract, the user repeatedly cycles the actuation lever by pressing the foot pedal downward and allowing it to return to its elevated starting position. This elevated starting position is fixed and cannot be adjusted. The fixed stroke distance of the actuation lever is designed to strike a balance between the amount of force required by the user to actuate the wheel dolly and the degree of movement (expansion/contraction) of the wheel dolly per cycle.

Nevertheless, in certain situations, such as when lifting exceptionally heavy vehicles, a user of a wheel dolly might desire to increase mechanical advantage in trade for a greater number of actuation cycles to complete the lift. That is, the user may wish to lower the starting height of the actuation lever and the foot pedal (i.e., lengthen the lever arm) to reduce the initial downward force needed to actuate the wheel dolly and to make cycling the wheel dolly more comfortable. As a result, there is a clear need for an improved wheel dolly that retains the many advantages of the GOJAK^{®} wheel dolly while incorporating an adjustable starting height for the foot pedal.

### SUMMARY OF THE INVENTION

Embodiments of the present invention address the above-identified need by providing an improved wheel dolly that addresses the issues set forth above.

Aspects of the invention are directed to an apparatus comprising a first body portion and a second body portion. The first body portion comprises a first tubular portion defining a plurality of notches, and a first roller translationally coupled to the first tubular portion and oriented perpendicular to the first tubular portion. The second body portion comprises a second tubular portion receiving at least part of the first tubular portion, a second roller translationally coupled to the second tubular portion and oriented perpendicular to the second tubular portion, and a pair of pawls. In addition, the second body portion further comprises an actuation lever operative to cause the pair of pawls to act on the plurality of notches to translate the first tubular portion relative to the second tubular portion, a direction selector positionable to modify how the pair of pawls behave so as to select a lifting mode and a lowering mode, and a height selector positionable to modify a starting height of the actuation lever so as to select a full-height mode and a reduced-height mode. In the lifting mode, every cycle of the actuation lever moves the first roller towards the second roller by a distance, the distance in the full-height mode greater than that in the reduced-height mode. In the lowering mode, every cycle of the actuation lever moves the first roller away from the second roller.

Advantageously, embodiments in accordance with aspects of the invention provide a wheel dolly that allows a user to lower the starting height of the actuation lever if so desired. With the lower starting height, users may be able to actuate the wheel dolly with less force and may find using the wheel dolly more comfortable.

### BRIEF DESCRIPTION OF THE DRAWINGS

These and other features, aspects, and advantages of the present invention will become better understood with regard to the following description, appended claims, and accompanying drawings where:
FIG. 1 shows a perspective view of a wheel dolly in accordance with an illustrative embodiment of the invention with the wheel dolly is in its lifting/full-height mode;
FIG. 2 shows a perspective view of the FIG. 1 wheel dolly in its lifting/reduced-height mode;
FIG. 3 shows a perspective view of the FIG. 1 wheel dolly in its lowering/full-height mode;
FIG. 4 shows an alternative perspective view of the FIG. 1 dolly in its lifting/full-height mode;
FIG. 5 shows an exploded perspective view of the FIG. 1 wheel dolly;
FIG. 5A shows a magnified exploded perspective view of the direction selector and the flat spring in the FIG. 1 wheel dolly;
FIG. 5B shows a magnified, exploded, perspective view of the height selector in the FIG. 1 wheel dolly;
FIG. 6 shows a side view of the drive assembly portion of the FIG. 1 wheel dolly with the wheel dolly in its lifting/full-height mode;
FIGS. 7 and 8 show side views of the drive assembly portion of the FIG. 1 wheel dolly as the wheel dolly is transitioned from the lifting/full-height mode to the lifting/reduced-height mode;
FIGS. 9-11 show side views of the drive assembly portion of the FIG. 1 wheel dolly as the wheel dolly is transitioned from the lifting/reduced-height mode to the lowering/full-height mode;
FIGS. 12-15 show broken side views of the drive assembly portion of the FIG. 1 wheel dolly at various stages of actuation in the lifting/full-height mode;
FIGS. 16-19 show broken side views of the drive assembly portion of the FIG. 1 wheel dolly at various stages of actuation in the lifting/reduced-height mode; and
FIGS. 20-22 show broken side views of the drive assembly portion of the FIG. 1 wheel dolly at various stages of actuation in the lowering/full-height mode.

### DETAILED DESCRIPTION OF THE INVENTION

The present invention will be described with reference to illustrative embodiments. For this reason, numerous modifications can be made to these embodiments and the results will still come within the scope of the invention. No limitations with respect to the specific embodiments described herein are intended or should be inferred.

As used herein and in the appended claims, a "tubular" element may be round tubular or square tubular. "Parallel" means parallel within plus or minus ten degrees. "Perpendicular" means perpendicular within plus or minus ten degrees. "About" means within plus or minus ten percent. The "stroke distance" of a lever describes how far a lever moves when actuated in one direction. To "cycle" a lever means moving the lever from its starting position in one direction to the maximum extent of the lever's travel, and then returning the lever to its starting position. The "starting height" of a lever is the height that the highest point on the lever achieves when the lever is extended upward to its vertical limit.

Aspects of the invention will be described herein with reference to a wheel dolly 100 (i.e., an apparatus) in accordance with an illustrative embodiment of the invention. The wheel dolly 100 can lift the wheel of a vehicle and then support the wheel on casters. After the vehicle is repositioned, the wheel 1000 can be lowered back to the ground and the wheel dolly 100 disengaged from the vehicle.

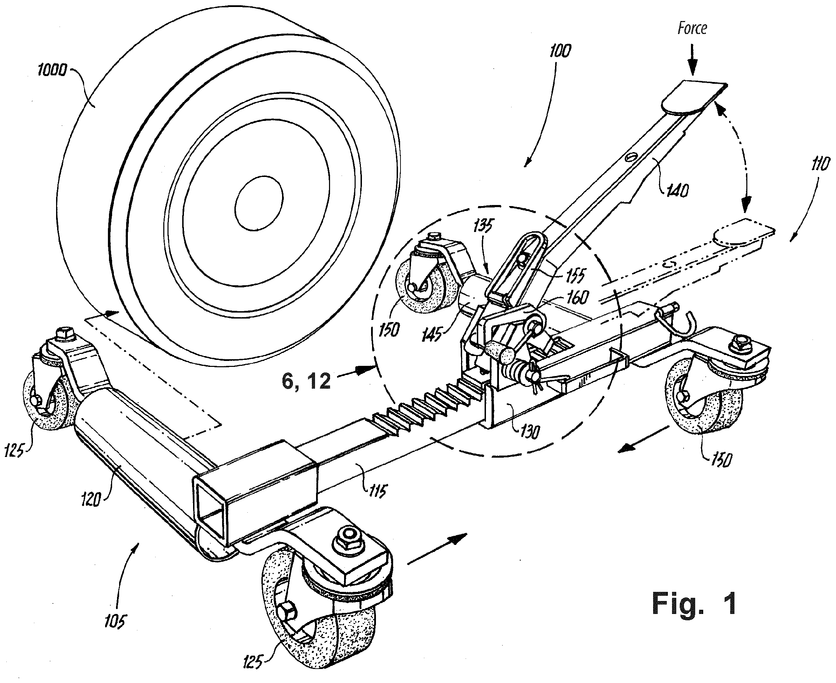

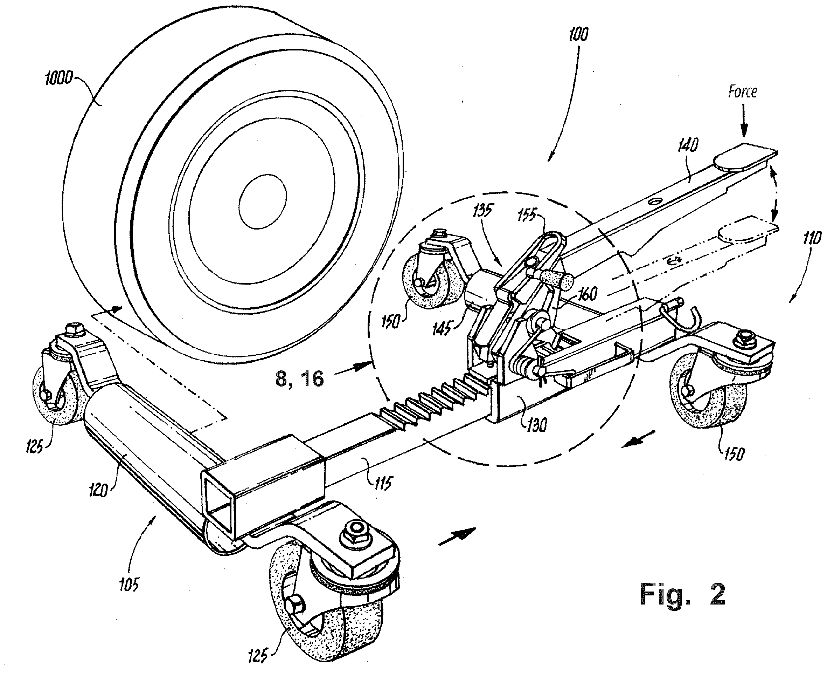

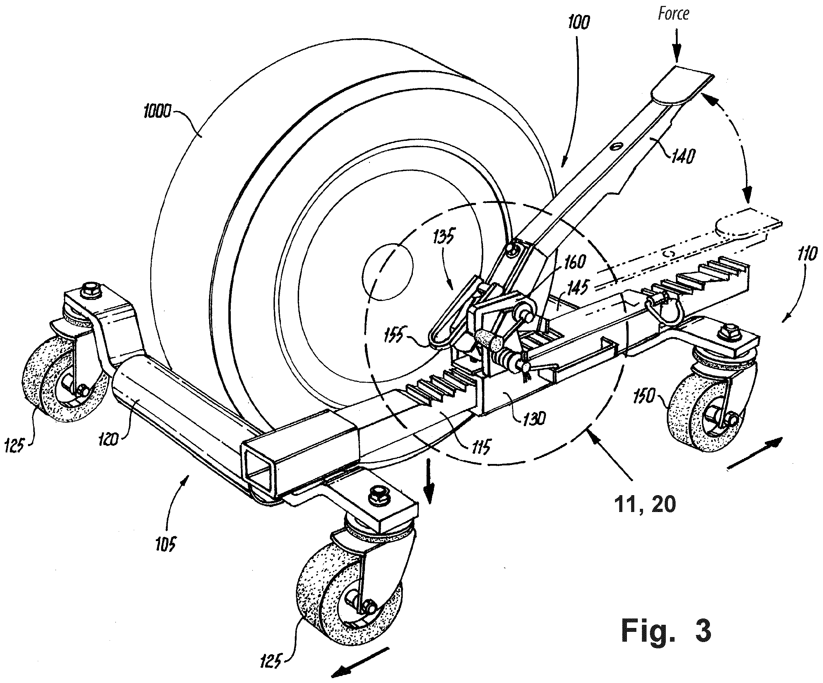

The wheel dolly 100 can take on three distinct operational modes. FIGS. 1-3 provide perspective views of the wheel dolly 100 in each one of these modes. In FIGS. 1 and 2, the wheel dolly 100 is being positioned to lift a wheel 1000. In FIG. 3, the wheel dolly 100 is already supporting the wheel 1000 and is being utilized to lower the wheel 1000.

The wheel dolly 100 consists of two main components: a first body portion 105 and a second body portion 110. The first body portion 105 includes a first tubular portion 115, a first roller 120, and a first pair of casters 125. The second body portion 110 features a second tubular portion 130, a drive assembly 135 (with an actuation lever 140), a second roller 145, and a second pair of casters 150. The first tubular portion 115 is partially inserted into the second tubular portion 130, creating a telescoping arrangement. The rollers 120 are translationally coupled to their respective tubular portions 115, 130 and are oriented perpendicular to them. Actuating the drive assembly 135 with the actuation lever 140 translates the first tubular portion 115 relative to the second tubular portion 130. This translation, in turn, changes the distance between the first roller 120 and the second roller 145. Bringing the rollers 120, 145 together allows them to lift the wheel 1000 off the ground, as shown in FIGS. 1 and 2. Moving the rollers 120, 145 apart lowers the wheel 1000 back to the ground, as depicted in FIG. 3.

The three operational modes of the wheel dolly 100 are selected using a direction selector 155 and a height selector 160. Both selectors 155, 160 are elements in the drive assembly 135 and are visible in their various user-selectable positions in FIGS. 1-3. TABLE 1 summarizes the behavior of the wheel dolly 100 in its different modes.

**TABLE 1 - BEHAVIOR OF WHEEL DOLLY 100 BY OPERATIONAL MODE**

| **FIGURE** | **DIRECTION SELECTOR MODE** | **DIRECTION OF TRANSLATION** | **HEIGHT SELECTOR MODE** | **STARTING HEIGHT OF ACTUATION LEVER** | **TRANSLATION DISTANCE PER CYCLE** |
|---|---|---|---|---|---|
| **FIG. 1** | LIFTING | ROLLERS TOWARDS EACH OTHER | FULL-HEIGHT | *HFH* | *DFH* |
| **FIG. 2** | LIFTING | ROLLERS TOWARDS EACH OTHER | REDUCED-HEIGHT | *H_{RH}* (where *H_{RH} < H_{FH}*) | *D_{RH}* (where *D_{RH} < D_{FH}*) |
| **FIG. 3** | LOWERING | ROLLERS AWAY FROM EACH OTHER | FULL-HEIGHT | *HFH* | *D_{L}* |

In FIG. 1, the direction selector 155 is positioned to select the lifting mode, and the height selector 160 is positioned to select the full-height mode, placing the wheel dolly 100 in the lifting/full-height mode. In this mode, the starting height of the actuation lever 140 is *H_{FH},* and each cycle of the actuation lever 140 causes the first roller 120 to move towards the second roller 145 by *D_{FH}.* In contrast, in FIG. 2, the direction selector 155 is still positioned to select the lifting mode, but the height selector 160 is positioned in the reduced-height mode, placing the wheel dolly 100 in the lifting/reduced-height mode. In this mode, the starting height of the actuation lever 140 is *H_{RH},* where *H_{RH}* is less than *H_{FH}.* With the reduced stroke distance, each cycle of the actuation lever 140 only translates the first roller 120 towards the second roller 145 by *D_{RH},* where *D_{RH}* is less than *D_{FH}.* Finally, in FIG. 3, the direction selector 155 is positioned to select the lowering mode, and the height selector 160 is positioned to select the full-height mode, meaning the wheel dolly 100 is in the lowering/full-height mode. In this mode, the starting height of the actuation lever 140 is again *H_{FH},* and each cycle of the actuation lever 140 moves the first roller 120 away from the second roller 145 by *D_{L}.* Notably, the design of the wheel dolly 100 intentionally prevents it from being configured in a lowering/reduced-height mode.

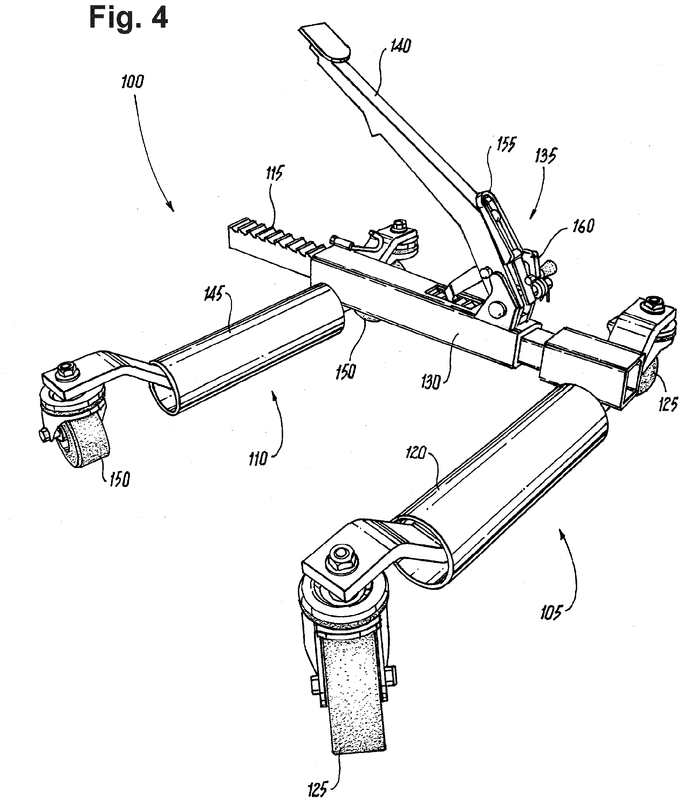

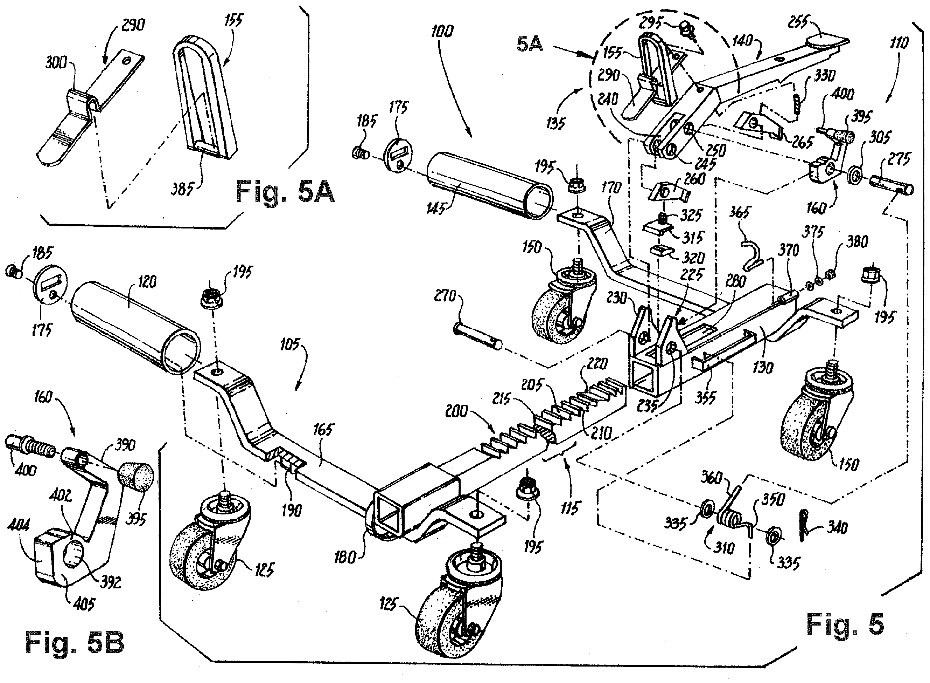

Additional aspects of the invention are described in FIGS. 4 and 5, with FIG. 4 showing a rear perspective view of the wheel dolly 100 in its lifting/full-height mode, and FIG. 5 showing an exploded perspective view of the wheel dolly 100. For purposes of orientation, the proximal direction is towards the lower left in FIG. 5, while the distal direction is towards the upper right. "Left" is towards the upper left, and "right" is towards the lower right.

The first roller 120 is positioned on a first arm 165, which is attached to the first tubular portion 115 at a ninety-degree angle. Similarly, the second roller 145 is positioned on a second arm 170, which is attached to the second tubular portion 130 at a ninety-degree angle. This configuration ensures that, as the tubular portions 115, 130 telescope, the rollers 120, 145 move relative to each other while remaining parallel. Each roller 120, 145 is secured to its respective arm 165, 170 using a roller raceway 175 and a support ring 180. The roller raceways 175 slide onto their arms 165, 170 and are fixed in place with raceway screws 185, which engage raceway brackets 190 welded beneath the arms 165, 170. The support rings 180 are welded directly to their arms 165, 170. This configuration allows the rollers 120, 145 to rotate freely about their arms 165, 170.

The first pair of casters 125 and the second pair of casters 150 are attached to the remainder of the wheel dolly 100 via locknuts 195. The first pair of casters 125 are attached to opposite ends of the first arm 165, while the second pair of casters 150 are attached to opposite ends of the second arm 170.

The first tubular portion 115 defines a series of notches 200 on its upper surface. Each notch 200 defines two respective faces: a vertical notch face 205 and an angled notch face 210. The vertical notch faces 205 are oriented perpendicular to the longitudinal axis of the first tubular portion 115, and the angled notch faces 210 are oriented at an angle with respect to the longitudinal axis. The angled notch faces 210 gradually decrease in height as one moves towards the second tubular portion 130. Small lands 215 are present between the notches 200. A larger, end-stop notch 220 is present proximate the terminus of the first tubular portion 115. This end-stop notch 220 prevents the first tubular portion 115 from being fully disengaged from the second tubular portion 130, as detailed below.

The drive assembly 135 is attached to the second tubular portion 130 via a clevis bracket 225, which is welded to the top of the second tubular portion 130. The clevis bracket 225 is configured as two tabs 230, each of which features a hole. These holes are aligned to form an opposed pair of clevis holes 235.

The actuation lever 140 is an elongate lever with a slight bend about halfway down its length. At a proximal end of the actuation lever 140, the actuation lever 140 features a cutout 240 that divides the actuation lever 140 widthwise into two separate, spaced-apart lever portions. Two holes in the left lever portion align with two holes in the right lever portion to create a proximal pair of opposed lever holes 245 and a distal pair of opposed lever holes 250. A foot pedal 255 resides at the distal terminus of the actuation lever 140.

The drive assembly 135 further comprises two pawls: a locking pawl 260 and a working pawl 265. Attachment of the locking pawl 260 is via a lower pin 270, which passes through the opposed pair of clevis holes 235, the proximal pair of opposed lever holes 245, and a hole in the locking pawl 260. In this manner, both the actuation lever 140 and the locking pawl 260 are attached to the second tubular portion 130 by the lower pin 270 and the clevis bracket 225. Attachment of the working pawl 265 is via an upper pin 275, which passes through the distal pair of opposed lever holes 250 and a hole in the working pawl 265. So attached, portions of both pawls 260, 265 occupy the cutout 240 in the actuation lever 140 and are free to rotate about their respective pins 270, 275. The pawls 260, 265 are also positioned to allow them to access the notches 200 in the first tubular portion 115 through a window 280 in the top of the second tubular portion 130.

The direction selector 155 interacts with a flat spring 290 to achieve its desired function. FIG. 5A shows a magnified exploded perspective view of both elements. The flat spring 290 is attached to the top of the actuation lever 140 so that a proximal half of the flat spring 290 overlaps the cutout 240 in the actuation lever 140. Attachment of the flat spring 290 is via a flat spring screw 295 at the distal end of the flat spring 290. The flat spring 290 defines a bow 300 about halfway down its length. A portion of the direction selector 155 underlies the bow 300 to hold the direction selector 155 in place against the actuation lever 140.

Mounting of the height selector 160 is via the upper pin 275, which passes through both the actuation lever 140 and a hole in the height selector 160 so that the height selector 160 is rotatably mounted on the upper pin 275. The height selector 160 is captured in place by a selector washer 305 and a torsion spring 310 (further described below). FIG. 5B shows a magnified, exploded, perspective view of the height selector 160 with additional elements denoted. These additional elements will also be described below.

A plate 315 is disposed immediately below the locking pawl 260. The plate 315 covers a block 320, which sits in the window 280 and slides atop the notches 200 of the first tubular portion 115. An end-stop spring 325 spans between the plate 315 and a proximal end of the locking pawl 260. At the plate 315, the end-stop spring 325 engages the shaft of a small bolt that passes upward through the plate 315. At the locking pawl 260, the end-stop spring 325 engages a recess in the locking pawl 260. The end-stop spring 325 both presses downward on the plate 315 and the block 320, while also pushing upward on the locking pawl 260 so that the distal end of the locking pawl 260 is urged downward towards the notches 200.

If the first tubular portion 115 is withdrawn from the second tubular portion 130 to an extent that the block 320 encounters the end-stop notch 220, the block 320 will engage the end-stop notch 220 and prevent the first tubular portion 115 from being withdrawn any further. In this manner, the end-stop notch 220 prevents the first tubular portion 115 from being fully disengaged from the second tubular portion 130. Once the first tubular portion 115 is again translated towards the second tubular portion 130, the block 320 will return to its normal position sliding atop the notches 200.

Still referring to FIG. 5, a pawl spring 330 spans between the actuation lever 140 and the proximal end of the working pawl 265. At the actuation lever 140, the pawl spring 330 engages the shaft of the flat spring screw 295. At the working pawl 265, the pawl spring 330 engages a recess in the top of the working pawl 265. The pawl spring 330 urges the distal end of the working pawl 265 downward towards the notches 200. At the same time, the torsion spring 310 is disposed on the lower pin 270 and is held in place by spring washers 335 and a cotter pin 340. A first leg 350 of the torsion spring 310 engages a dolly handle 355 on the outside of the second body portion 110, while a second leg 360 of the torsion spring 310 penetrates a passage in the upper pin 275 outside of the height selector 160. This penetration captures the height selector 160 on the upper pin 275. Arranged in this manner, the torsion spring 310 urges the actuation lever 140 upward and away from the second tubular portion 130.

The second body portion comprises a hook 365 that can be positioned to capture the actuation lever 140 in its lowered position to facilitate transport of the wheel dolly 100. The hook 365 engages a hollow cylindrical receiver 370 on the second tubular portion 130. The hook 365 is held in place by hook washers 375 and a nut 380.

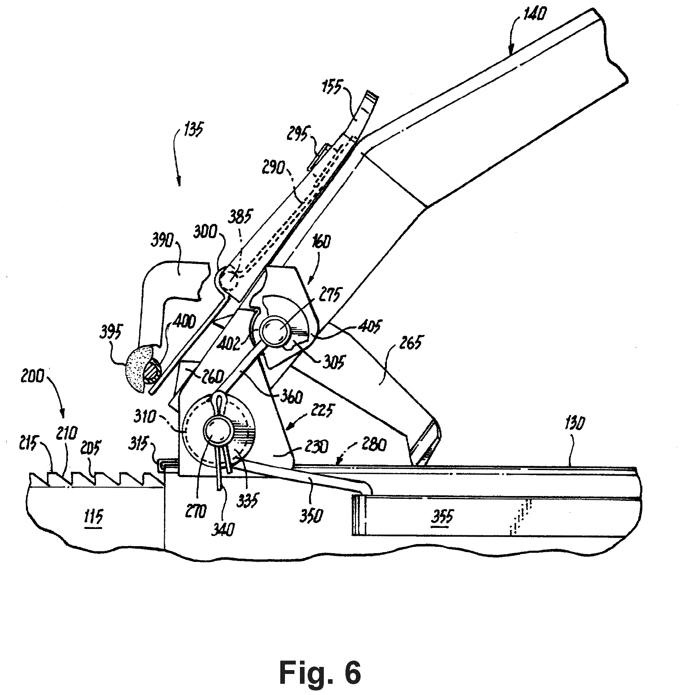

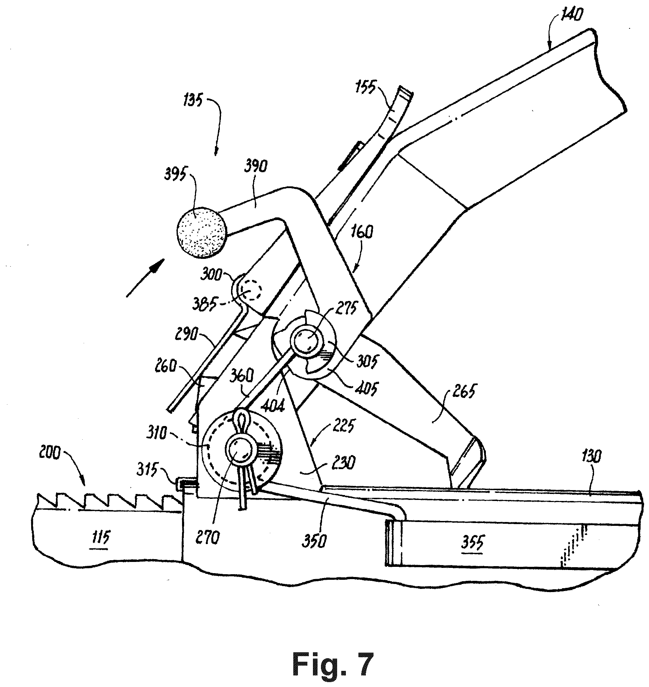

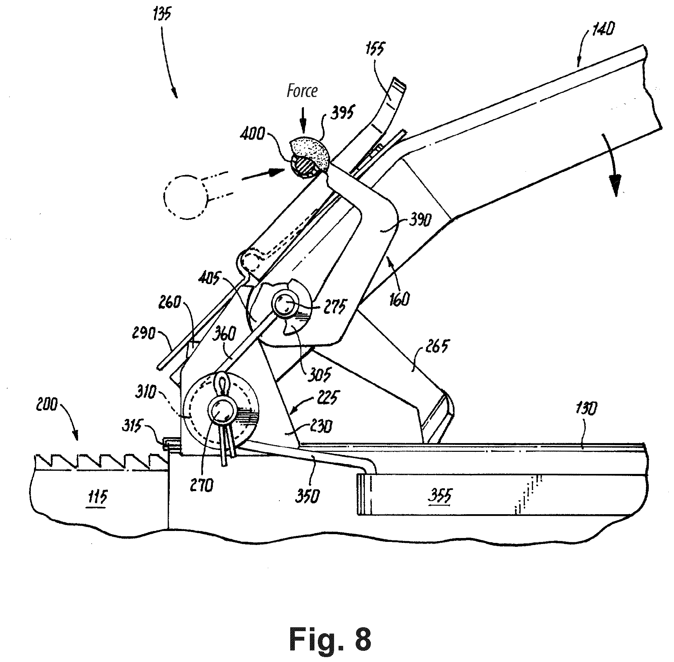

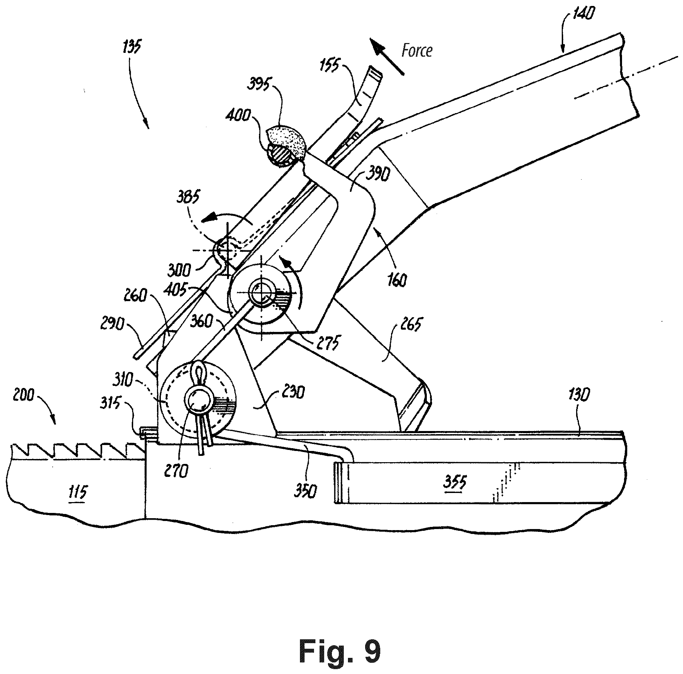

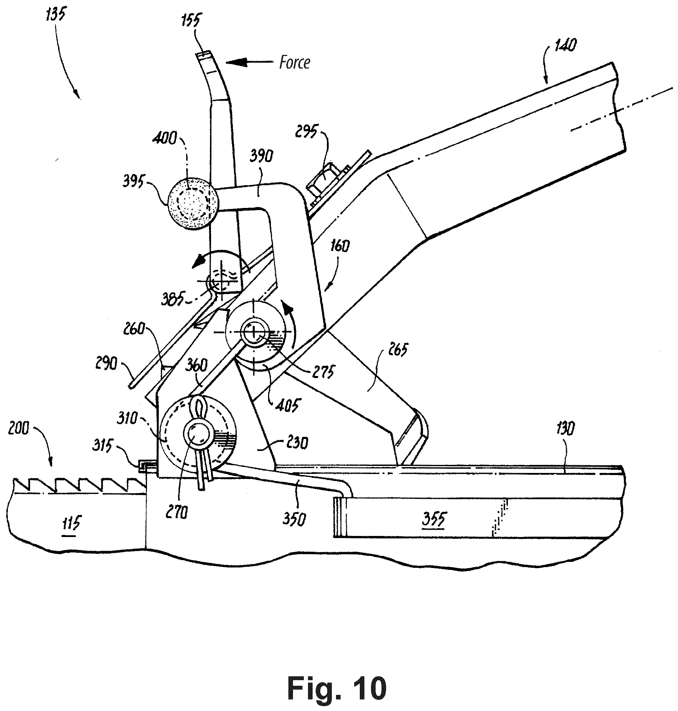

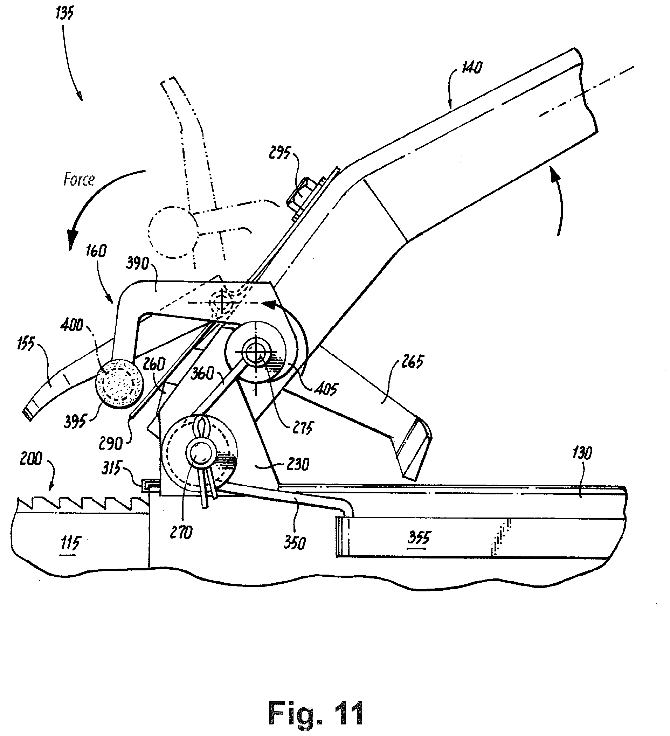

Additional details of the direction selector 155 and the height selector 160, and the way these elements function in the wheel dolly 100, are now presented with reference to FIGS. 6-11. These figures show side views of the wheel dolly 100 in the region of the drive assembly 135. FIG. 6 shows the drive assembly 135 with the wheel dolly 100 in its lifting/full-height mode. FIGS. 7 and 8 show the drive assembly 135 as the wheel dolly 100 is transitioned from the lifting/full-height mode to the lifting/reduced-height mode. And finally, FIGS. 9-11 show the drive assembly 135 as the wheel dolly 100 is transitioned from the lifting/reduced-height mode to the lowering/full-height mode. In FIGS. 6-8, the washer 305 is partially broken away to better reveal the underlying elements.

As indicated earlier, the direction selector 155 interacts with the flat spring 290 to achieve its function. The direction selector 155 defines an off-center crossmember 385 that sits underneath the bow 300. With the direction selector 155 in the lifting mode position (i.e., with the direction selector 155 rotated furthest clockwise), the off-center crossmember 385 presses upward on the flat spring 290, effectively bending the proximal half of the flat spring 290 upward away from the cutout 240 in the actuation lever 140. Conversely, with the direction selector 155 in the lowering mode (i.e., with the direction selector 155 rotated further counterclockwise), the off-center crossmember 385 does not apply an upward force on the flat spring 290, allowing the flat spring 290 to relax to its unbent state. The direction selector 155 is thereby operative to bend and unbend the flat spring 290. In this manner, the direction selector 155 modifies the shape of the flat spring 290 in the region of cutout 240 to modify how the pair of pawls 260, 265 behave when the actuation lever 140 is cycled.

The height selector 160 comprises: an elbow-shaped body 390, a selector hole 392, a selector handle 395, a nib 400, a narrow portion 402, a flat edge 404, and an eccentric lobe 405 (*see* FIG. 5B). The selector handle 395 and the nib 400 project from opposite sides of the body 390. The selector handle 395 projects from the body 390 away from the actuation lever 140 and provides a convenient means of grasping the height selector 160 and rotating it on the upper pin 275. The nib 400 projects from the body 390 towards the actuation lever 140 and laterally overlaps the arc of the direction selector 155. The narrow portion 402 and the eccentric lobe 405 occupy the circumference of the selector hole 392.

In use, a portion of the height selector 160 next to the upper pin 275 impacts the right tab 230 of the clevis bracket 225 as the actuation lever 140 reaches its maximum height. The thickness of the height selector 160 in this region thereby determines how high the actuation lever 140 is allowed to rise. With the height selector 160 in the full-height mode (i.e., with the height selector 160 rotated furthest counterclockwise as shown in FIG. 6), the narrow portion 402 of the height selector 160 faces the right tab 230 of the clevis bracket 225, and the actuation lever 140 is thereby able to achieve the full starting height *H_{FH}.* For clarity, the eccentric lobe 405 does not face the right tab 230 of the clevis bracket 225 in full-height mode. In contrast, with the height selector 160 in the reduced-height mode (i.e., with the height selector 160 rotated furthest clockwise as shown in FIG. 8), the eccentric lobe 405 does face the right tab 230 of the clevis bracket 225 and limits the upward travel of the actuation lever 140 to something less than that allowed in full-height mode. The starting height of the actuation lever 140 is reduced to something less than *H_{FH},* namely *H_{RH},* because the eccentric lobe 405 impacts the clevis bracket before the actuation lever 140 can reach *H_{FH}.* The lowering of the actuation lever 140 in the transition from the lifting/full-height mode to the lifting/reduced-height mode is illustrated in FIGS. 7 and 8. Once in the lifting/reduced-height mode, the flat edge 404 on the side of the eccentric lobe 405 helps to prevent the height selector 160 from rotating out of position uncommanded.

Notably, the overlap between the nib 400 and the arc of the direction selector 155 prevents the selection of a lowering/reduced-height mode for the wheel dolly 100. That is, with the height selector 160 positioned to select the reduced-height mode, the direction selector 155 is physically inhibited from being positioned to select the lowering mode. FIGS. 9-11 show this dynamic. Because of the nib 400, the direction selector 155 cannot be rotated counterclockwise without the height selector 160 doing the same. That is, the height selector 160 must be transitioned counterclockwise to select the full-height mode before or while the direction selector 155 is transitioned counterclockwise to select the lowering mode. The transition from the lifting/reduced-height mode to the lowering/full-height mode has the effect of raising the starting height of the actuation lever 140 from *H_{RH}* back to *H_{FH},* as shown in the figures.

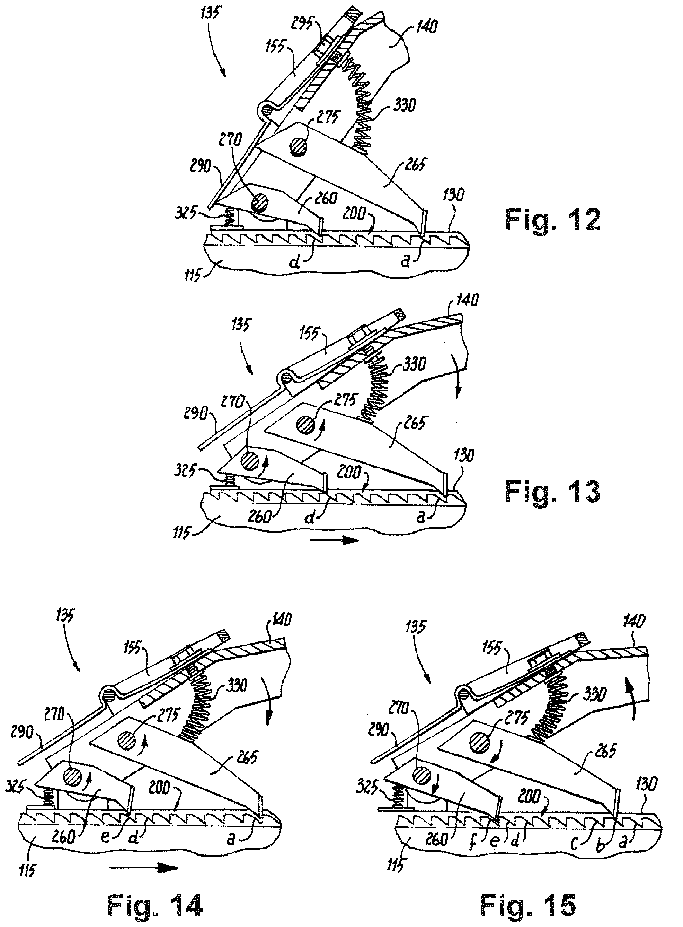

FIGS. 12-22 show broken side views of the wheel dolly 100 in the region of the drive assembly 135 at various stages in the cycling of the actuation lever 140. While these figures are not necessarily drawn to scale, they provide a functional representation of the dynamics in the region of the pawls 260, 265. FIGS. 12-15 start by showing the functioning of the wheel dolly 100 in its lifting/full-height mode while the actuation lever 140 is being moved from its uppermost state to its lowermost state, and then returned slightly upward. In this mode, the actuation lever 140 is at *H_{FH}* before being cycled. Moreover, in this mode, the flat spring 290 is bent away from the pawls 260, 265 by the direction selector 155 and does little to influence the behavior of the pawls 260, 265.

While the first tubular portion 115 is still in its uppermost state, the locking pawl 260 engages a notch *d* while the working pawl 265 is unengaged (FIG. 12). As the actuation lever 140 is lowered, the working pawl 265 engages a notch *a* and begins to push the first tubular portion 115 further into the second tubular portion 130. Meanwhile, the locking pawl 260 rides over the advancing notches 200 as they pass underneath it (FIGS. 13 and 14). As the actuation lever 140 reaches its lowermost position and starts back upward, the working pawl 265 disengages while the locking pawl 260 engages a notch *f*, two notches away from notch *d* (FIG. 15). In this manner, while the actuation lever 140 is traveling downward, the working pawl 265 places a force on one of the notches 200 to cause the first tubular portion 115 to translate further into the second tubular portion 130, and, while the actuation lever 140 is traveling upward, the locking pawl 260 engages one of the notches 200 to inhibit the first tubular portion 115 from withdrawing from the second tubular portion 130 in response to a weight of the wheel 1000. A cycle of the actuation lever 140 pushes the first tubular portion 115 into the second tubular portion 130 by twice the pitch of the notches 200 (i.e., *D_{FH}* is twice the pitch of the notches 200).

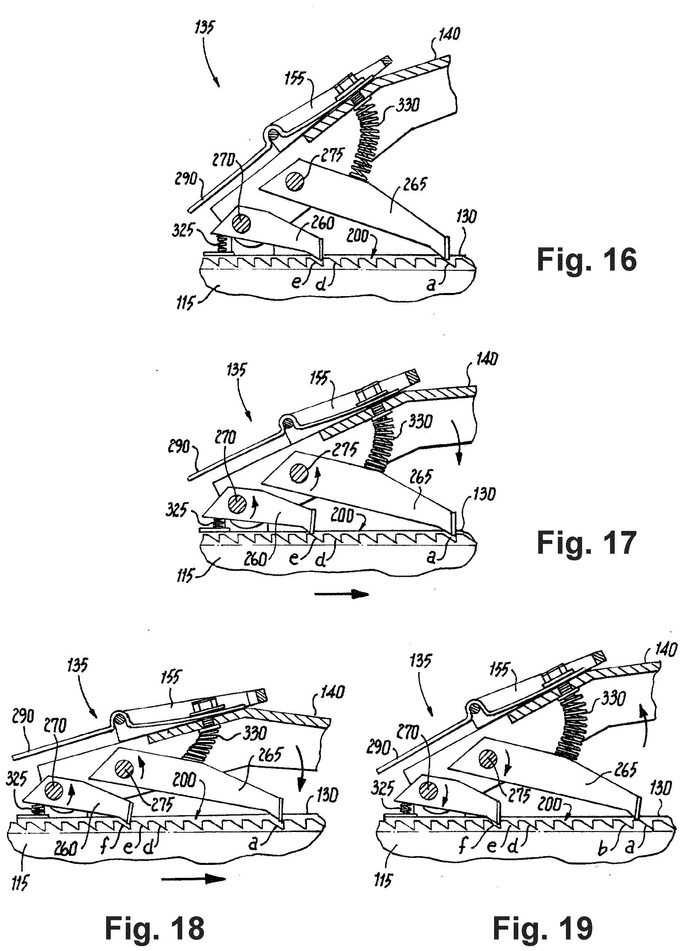

In a similar manner, FIGS. 16-19 show the functioning of the wheel dolly 100 in its lifting/reduced-height mode. The functioning of the various elements of the drive assembly 135 in this mode are very similar to that described with reference to FIGS. 12-15. However, in the lifting/reduced-height mode, the actuation lever 140 starts at a reduced starting height, *H_{RH},* before being cycled. With the actuation lever 140 starting at a lower starting height, one achieves less translation between the tubular portions 115, 130 per cycle (i.e., less work per cycle).

While the actuation lever 140 is still in its uppermost state, the locking pawl 260 engages a notch e while the working pawl 265 remains unengaged (FIG. 16). As the actuation lever 140 is lowered, the working pawl 265 engages a notch *a* and begins to push the first tubular portion 115 further into the second tubular portion 130, while the locking pawl 260 rides over the advancing notch 200 passing underneath it (FIG. 17). As the actuation lever 140 reaches its lowermost position and starts back upwards, the working pawl 265 disengages while the locking pawl 260 engages a notch *f*, one notch away from notch e (FIGS. 18 and 19). A cycle of the actuation lever 140 thereby pushes the first tubular portion 115 into the second tubular portion 130 by a distance equal to the pitch of the notches 200 (i.e., *D_{RH}* is the pitch of the notches 200). In this particular example, *D_{RH}* is half of *D_{FH}.*

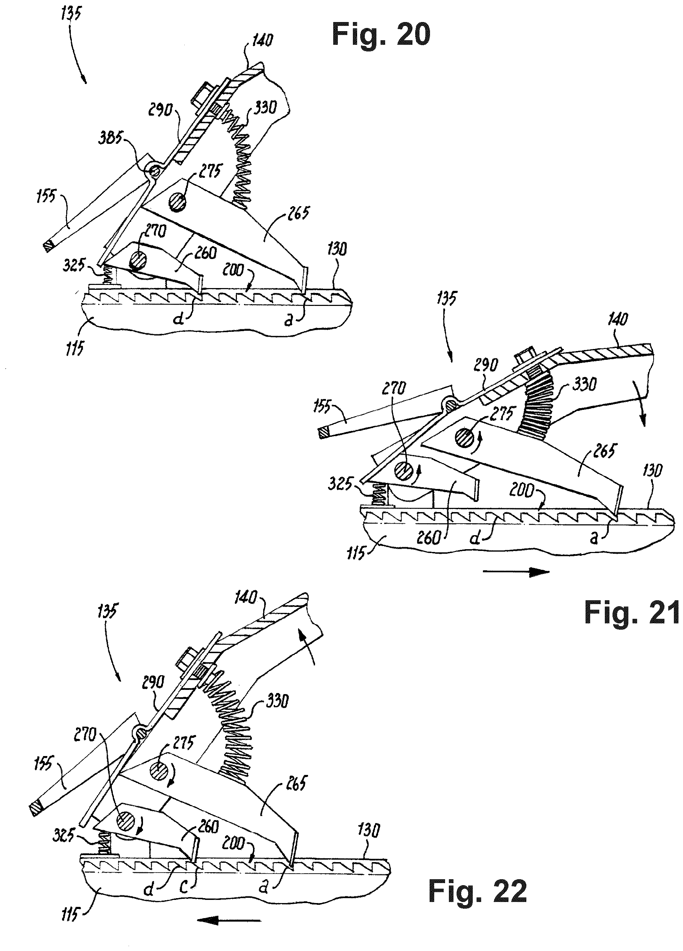

FIGS. 20-22 show the functioning of the wheel dolly 100 while in its lowering/full-height mode. In this mode, the actuation lever 140 is able to rise to *H_{FH}* and the flat spring 290 is positioned so as to influence the functioning of the pawls 260, 265. With the actuation lever 140 in its highest state, the locking pawl 260 engages a notch *d* while the working pawl 265 is unengaged (FIG. 20). Subsequently, as the actuation lever 140 is forced lower, the working pawl 265 engages a notch *a* and pushes the first tubular portion 115 into second tubular portion 130. The movement of the first tubular portion 115 into the second tubular portion 130, releases the locking pawl 260 from notch *d*, which allows the distal end of the locking pawl 260 to rise upward away from the notches 200 in response to the pressing of the flat spring 290 on the proximal portion of the locking pawl 260. Ultimately, the working pawl 265 remains engaged with notch *a* while the locking pawl 260 is retracted from the notches 200 (FIG. 21).

Subsequently, the actuation lever 140 is further lowered and then rises. While rising, the working pawl 265 remains engaged with notch *a*, and first tubular portion 115 controllably moves away from the second tubular portion 130 in response to the weight on the wheel dolly 100. As the first tubular portion 115 moves away from the second tubular portion 130, the working pawl 265 pivots clockwise until, at some point, the proximal end of the working pawl 265 presses upward on the flat spring 290 enough to release the locking pawl 260 from the flat spring 290, allowing the distal end of the locking pawl 260 to drop back down to the notches 200 (FIG. 22). As the actuation lever 140 further rises, the locking pawl 260 engages a notch c and the working pawl is ultimately released from notch *a.* Notch c is one notch from notch *d,* meaning that *D_{L}* in this illustrative nonlimiting embodiment is equal to the pitch of the pawls 260, 265.

The wheel dolly 100 thereby comprises the first body portion 105 and the second body portion 110. The first body portion 105 comprises the first tubular portion 115 defining the plurality of notches 200, and the first roller 120 translationally coupled to the first tubular portion 115 and oriented perpendicular to the first tubular portion 115. The second body portion 110 comprises the second tubular portion130 receiving at least part of the first tubular portion 115, the second roller 145 translationally coupled to the second tubular portion 130 and oriented perpendicular to the second tubular portion 130, and the pair of pawls 260, 265. In addition, the second body portion 110 further comprises the actuation lever 140 operative to cause the pair of pawls 260, 265 to act on the plurality of notches 200 to translate the first tubular portion 115 relative to the second tubular portion 130, the direction selector 155 positionable to modify how the pair of pawls 260, 265 behave so as to select a lifting mode and a lowering mode, and the height selector 160 positionable to modify a starting height of the actuation lever 140 so as to select a full-height mode and a reduced-height mode. In the lifting mode, every cycle of the actuation lever 140 moves the first roller 120 towards the second roller 145 by a distance, the distance in the full-height mode greater than that in the reduced-height mode. In the lowering mode, every cycle of the actuation lever 140 moves the first roller 120 away from the second roller 145.

In practice, four wheel dollies like the wheel dolly 100 can be used to allow a single person to reposition a vehicle in any direction, making them ideal for confined spaces like garages, workshops, or showrooms. A key advantage of the wheel dolly 100, and, more generally, wheel dollies in accordance with aspects of the invention, is the ability to adjust the starting height of the actuation lever 140. Lowering the starting height allows the user to increase mechanical advantage at the cost of reduced translation distance per cycle. With the foot pedal starting at a lower position, the lever arm at the beginning of each cycle is lengthened, reducing the force required to initiate movement and making cycling the wheel dolly 100 easier for the user. For example, the downward force required on a lever making a 30-degree angle with the horizontal may be about 58% of the force required on a lever making a 60-degree angle with the horizontal to achieve the same torque. Additionally, users may be able to apply greater force to the actuation lever 140 when the foot pedal 255 is positioned lower, as they can focus more of their body weight on the foot pedal 255 in this configuration. For users who prefer the higher starting height of the actuation lever 140, that option remains available. The new height selector 160 allows the user to easily choose their preferred mode of operation.

Once understood from the description provided herein, the wheel dolly 100 may be fabricated using conventional materials (e.g., steel) and conventional manufacturing techniques (e.g., casting, shaping, finishing) that will be familiar to one having ordinary skill in the relevant arts.

It should again be emphasized that the above-described embodiments of the invention are intended to be illustrative only. Other embodiments can use different types and arrangements of elements for implementing the described functionality. These numerous alternative embodiments within the scope of the appended claims will be apparent to one skilled in the art. The spirit and scope of the appended claims should not be limited solely to the description of the preferred embodiments contained herein.

For example, while the wheel dolly 100 is described as having two height modes, other embodiments in accordance with aspects of the invention could have more than two height modes. An alternative wheel dolly could have, for example, three height modes, each mode having a different starting height of the actuation lever. Having a high density of notches on the first tubular member helps to facilitate these additional height modes.

All the features disclosed herein may be replaced by alternative features serving the same, equivalent, or similar purposes, unless expressly stated otherwise. Thus, unless expressly stated otherwise, each feature disclosed is one example only of a generic series of equivalent or similar features.

For those jurisdictions that recognize the practice of incorporation by reference, U.S. Patent No. 4,854,803 is hereby incorporated by reference in its entirety into this application.

Embodiments of the invention are disclosed below.
There is disclosed in one embodiment, an apparatus comprising:
a first body portion comprising:
   a first tubular portion defining a plurality of notches; and
   a first roller translationally coupled to the first tubular portion and oriented perpendicular to the first tubular portion; and
a second body portion comprising:
   a second tubular portion receiving at least part of the first tubular portion;
   a second roller translationally coupled to the second tubular portion and oriented perpendicular to the second tubular portion;
   a pair of pawls;
   an actuation lever operative to cause the pair of pawls to act on the plurality of notches to translate the first tubular portion relative to the second tubular portion;
   a direction selector positionable to modify how the pair of pawls behave so as to select a lifting mode and a lowering mode; and
   a height selector positionable to modify a starting height of the actuation lever so as to select a full-height mode and a reduced-height mode;
wherein:
   in the lifting mode, every cycle of the actuation lever moves the first roller towards the second roller by a distance, the distance in the full-height mode greater than that in the reduced-height mode; and
   in the lowering mode, every cycle of the actuation lever moves the first roller away from the second roller.

In one embodiment, the first roller and the second roller are free to rotate.

In another embodiment, the second tubular portion defines a window therein; and

the pair of pawls act on the plurality of notches through the window.
In another embodiment, the actuation lever defines an actuation lever cutout therein; and
a respective portion of each of the pair of pawls occupies the actuation lever cutout.

In another embodiment, the apparatus described above, further comprises two springs urging the pair of pawls towards engagement with the plurality of notches.

In another embodiment, the apparatus described above further comprises a flat spring positionable to modify how the pair of pawls behave when the actuation lever is actuated.

In another embodiment, the direction selector is operative to bend and unbend the flat spring.

In another embodiment, the height selector is rotatably mounted on a pin passing through the actuation lever.

In another embodiment, a maximum height of the actuation lever is limited by the height selector impacting a separate part of the second body portion.

In another embodiment, the second body portion further comprises a clevis bracket supporting the actuation lever; and
the separate part of the second body portion is the clevis bracket.

In another embodiment, the height selector defines an eccentric lobe.

In another embodiment, the eccentric lobe faces the separate part of the second body portion with the height selector positioned to select the reduced-height mode; and
the eccentric lobe does not face the separate part of the second body portion with the height selector positioned to select the full-height mode.

In another embodiment, the second body portion further comprises a torsion spring urging the actuation lever away from the second tubular portion.

In another embodiment, the height selector defines a nib, which overlaps an arc of the direction selector.

In another embodiment, with height selector positioned to select the reduced-height mode, the direction selector is physically inhibited from being positioned to select the lowering mode.

In another embodiment, wherein, in the lifting mode, every cycle of the actuation lever moves the first roller towards the second roller by a distance, the distance in the reduced-height mode being half that in the full-height mode.

In another embodiment in the apparatus described above the first body portion further comprises a first pair of casters; and the second body portion further comprises a second pair of casters.

In another embodiment in the apparatus described above the apparatus is operative to lift a wheel positioned between the first roller and the second roller in response to cycling of the actuation lever.

In another embodiment, the pair of pawls comprises: a working pawl; and a locking pawl; while the actuation lever is traveling downward, the working pawl places a force on one of the plurality of notches to cause the first tubular portion to translate further into the second tubular portion; and while the actuation lever is traveling upward, the locking pawl engages one of the plurality of notches to inhibit the first tubular portion from withdrawing from the second tubular portion in response to a weight of the wheel.

In another embodiment, wherein, after lifting the wheel, the apparatus is operative to lower the wheel in response to cycling of the actuation lever.

## Claims

1. An apparatus comprising:
a first body portion comprising:
a first tubular portion defining a plurality of notches; and
a first roller translationally coupled to the first tubular portion and oriented perpendicular to the first tubular portion; and
a second body portion comprising:
a second tubular portion receiving at least part of the first tubular portion;
a second roller translationally coupled to the second tubular portion and oriented perpendicular to the second tubular portion;
a pair of pawls;
an actuation lever operative to cause the pair of pawls to act on the plurality of notches to translate the first tubular portion relative to the second tubular portion;
a direction selector positionable to modify how the pair of pawls behave so as to select a lifting mode and a lowering mode; and
a height selector positionable to modify a starting height of the actuation lever so as to select a full-height mode and a reduced-height mode;
wherein:
in the lifting mode, every cycle of the actuation lever moves the first roller towards the second roller by a distance, the distance in the full-height mode greater than that in the reduced-height mode; and
in the lowering mode, every cycle of the actuation lever moves the first roller away from the second roller.

2. The apparatus of claim 1, further comprising a flat spring positionable to modify how the pair of pawls behave when the actuation lever is actuated.

3. The apparatus of claim 2, wherein the direction selector is operative to bend and unbend the flat spring.

4. The apparatus of claim 1, wherein the height selector is rotatably mounted on a pin passing through the actuation lever.

5. The apparatus of claim 1, wherein a maximum height of the actuation lever is limited by the height selector impacting a separate part of the second body portion.

6. The apparatus of claim 5, wherein:
the second body portion further comprises a clevis bracket supporting the actuation lever; and
the separate part of the second body portion is the clevis bracket.

7. The apparatus of claim 5, wherein the height selector defines an eccentric lobe.

8. The apparatus of claim 7, wherein:
the eccentric lobe faces the separate part of the second body portion with the height selector positioned to select the reduced-height mode; and
the eccentric lobe does not face the separate part of the second body portion with the height selector positioned to select the full-height mode.

9. The apparatus of claim 1, wherein the second body portion further comprises a torsion spring urging the actuation lever away from the second tubular portion.

10. The apparatus of claim 1, wherein the height selector defines a nib, which overlaps an arc of the direction selector.

11. The apparatus of claim 1, wherein, with height selector positioned to select the reduced-height mode, the direction selector is physically inhibited from being positioned to select the lowering mode.

12. The apparatus of claim 1, wherein, in the lifting mode, every cycle of the actuation lever moves the first roller towards the second roller by a distance, the distance in the reduced-height mode being half that in the full-height mode.

13. The apparatus of claim 1, wherein the apparatus is operative to lift a wheel positioned between the first roller and the second roller in response to cycling of the actuation lever.

14. The apparatus of claim 13, wherein:
the pair of pawls comprises:
a working pawl; and
a locking pawl;
while the actuation lever is traveling downward, the working pawl places a force on one of the plurality of notches to cause the first tubular portion to translate further into the second tubular portion; and
while the actuation lever is traveling upward, the locking pawl engages one of the plurality of notches to inhibit the first tubular portion from withdrawing from the second tubular portion in response to a weight of the wheel.

15. The apparatus of claim 13, wherein, after lifting the wheel, the apparatus is operative to lower the wheel in response to cycling of the actuation lever.
